# FASCICULE DE BREVET EUROPEEN

(11) **EP 3 675 369 B1**
(45) Date de publication et mention de la délivrance du brevet: **16.12.2020**
(21) Numéro de dépôt: 19218217.8
(22) Date de dépôt: 19.12.2019
(51) Int. Cl.: H04B 1/00, H04B 1/04

(54) **DISPOSITIF D'AMPLIFICATION RF ET EMETTEUR RF COMPORTANT UN TEL DISPOSITIF**
RF-VERSTÄRKUNGSVORRICHTUNG UND RF-SENDER, DER EINE SOLCHE VORRICHTUNG UMFASST
RF AMPLIFICATION DEVICE AND RF TRANSMITTER COMPRISING SUCH A DEVICE

(30) Priorité: 28.12.2018 FR 1874206
(43) Date de publication de la demande: 01.07.2020
(73) Titulaire: Thales, 92400 Courbevoie (FR)
(72) Inventeur: DEMENITROUX, Wilfried, 49309 CHOLET (FR); BERTHOU, Nicolas, 49309 CHOLET (FR); MIQUEL, Stéphane, 92622 GENNEVILLIERS CEDEX (FR); MANDICA, Lucas, 49309 CHOLET (FR)
(74) Mandataire: Marks & Clerk France

(56) Documents cités:
- US-A1- 2010 097 153
- US-A1- 2017 005 618
- US-A1- 2018 159 563

## Description

La présente invention concerne un dispositif d'amplification RF. Elle concerne également un émetteur radio équipé d'un tel dispositif.
Le domaine de l'invention est notamment celui des émetteurs radio de puissance. L'invention s'applique en particulier dans tous types de postes de communications dans les gammes de fréquences HF et VHF pour la classe D par exemple.

L'invention adresse notamment la problématique de consommation électrique, et donc le rendement en puissance des modules d'émission radio fréquence, en particulier dans le cadre des postes radio H-V-UHF précités. Typiquement, un module d'émission comprend un circuit logique ayant notamment pour fonction de transmettre les échantillons décrivant le signal numérique en bande de base à un convertisseur numérique analogique ou CNA. Le signal bande de base analogique est alors transposé à une fréquence RF grâce à un modulateur IQ, étant donné l'intégration de modulations numériques dans les radios logicielles. Le signal RF est ensuite filtré et amplifié afin d'optimiser la linéarité et la chaîne de gain. Enfin, pour des applications impliquant des signaux de forts niveaux, le signal RF est amplifié en utilisant des étages de puissance, tels que des préamplificateurs et des amplificateurs de puissances, suivant la puissance désirée en sortie d'antenne.
Ce type de montage présente plusieurs inconvénients, parmi lesquels :
- Un faible rendement de la chaîne d'amplification en bande basse, beaucoup de watts étant perdus ;
- Une complexité de la chaîne d'amplification en bande basse avec de multiples filtres de bande, chacun occupant un volume non négligeable ;
- Un rendement très faible du poste de communications pour des modulations à enveloppe non constante, ce qui limite fortement la puissance moyenne du poste, et donc sa portée.

Ces problèmes sont notamment dus au fait qu'actuellement il faut deux postes radio pour couvrir les besoins HF-VHF-UHF, un poste étant dédié à l'émission dans la bande HF et l'autre poste étant dédié à l'émission dans les bandes VHF et UHF.

Dans ces conditions, on peut lister les besoins suivants pour les modules d'émission RF :
- Gain en surface et volume occupé, coût de réalisation diminué ;
- Rendement en puissance amélioré sur chaque sous-bande HF, VHF et UHF par rapport à celui des postes RF actuels ;
Un document US 2018/159563 A1 divulgue un circuit RF multibandes. Un document US 2017/005618 A1 divulgue un circuit de conversion de puissance à suivi d'enveloppe. Un document US 2010/097153 divulgue un procédé de modulation commutée d'un amplificateur RF.

Un but de l'invention est notamment de pallier les inconvénients précités et plus particulièrement de satisfaire les besoins listés ci-dessus. A cet effet, l'invention a pour objet un dispositif d'amplification radiofréquence, ledit dispositif fonctionnant dans une bande de fréquence basse et une bande de fréquence haute et comportant au moins :
- un premier module d'amplification apte à fonctionner dans ladite bande haute, dont l'amplification est modulée selon un suivi d'enveloppe du signal d'entrée dudit dispositif, apte à être relié en sortie à une première antenne adaptée à ladite bande haute ;
- un deuxième module d'amplification apte à fonctionner dans ladite bande basse et à réaliser ledit suivi d'enveloppe ;
- un commutateur commutant la sortie dudit deuxième module d'amplification :
   ∘ vers une deuxième antenne adaptée à ladite bande basse, lorsque ledit dispositif d'amplification fonctionne dans ladite bande basse ;
   ∘ vers ledit premier module d'amplification pour commander la modulation d'amplification effectuée par ledit premier module selon ledit suivi d'enveloppe, lorsque ledit dispositif d'amplification fonctionne dans ladite bande haute, dans le cas où l'amplification est réalisée par un transistor à effet de champ, la sortie du deuxième module d'amplification commande la tension drain dudit transistor.

Ledit deuxième module d'amplification fonctionne par exemple en classe D. Ledit premier module d'amplification fonctionne par exemple en classe AB.

Dans un mode de réalisation particulier, ledit premier module d'amplification comporte au moins :
- un circuit composé d'un convertisseur numérique-analogique CNA et d'une transposition de fréquence réalisant la conversion numérique-analogique d'un signal bande en bande de base puis sa transposition vers les bandes VHF-UHF ;
- un étage amplification de puissance permettant d'adapter la puissance du signal RF au niveau de ladite première antenne et ;
- un filtre.

Ledit étage d'amplification étant composé d'un transistor à effet de champs, la tension de drain dudit transistor est par exemple modulée par le signal de sortie dudit deuxième module d'amplification lorsque ledit commutateur (3) dirige la sortie de ce dernier vers ledit premier module d'amplification.

L'invention a également pour objet un émetteur radiofréquence équipé d'un tel dispositif d'amplification.

D'autres caractéristiques et avantages de l'invention apparaîtront à l'aide de la description qui suit, faite en regard de dessins annexés qui représentent :
- La figure 1, un schéma de principe d'un dispositif d'amplification selon l'invention ;
- La figure 2, une illustration des signaux produit dans le module d'amplification bande basse d'un dispositif selon l'invention.

Par la suite, nous désignerons par :
- Bande basse, les fréquences d'émission inférieures à 100 MHz ;
- Bande haute, les fréquences d'émission supérieures à 100 MHz.
Selon les applications, la limite entre les deux bandes peut varier. Plus généralement, la bande basse correspond donc aux fréquences inférieures à une fréquence donnée, par exemple 100 MHz, et la bande haute correspond aux fréquences supérieures à cette fréquence donnée, ces bandes basse et haute étant incluses dans le domaine fréquentiel de fonctionnement du dispositif d'amplification RF et de l'émetteur RF.

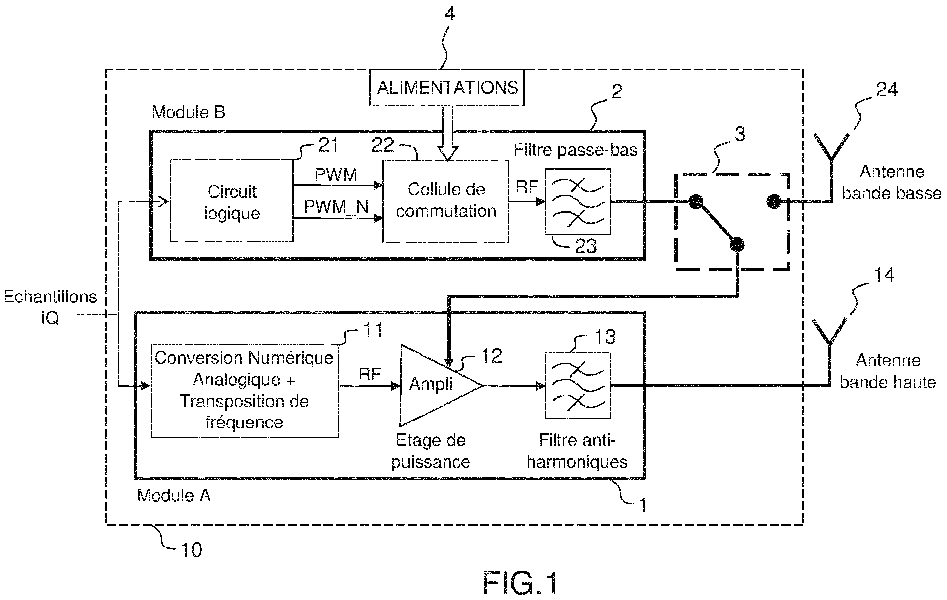

La figure 1 présente un schéma de principe d'un dispositif d'amplification selon l'invention.
La solution selon l'invention consiste à concevoir un seul module radiofréquence, au lieu de deux dans l'art antérieur, pouvant couvrir l'émission dans la bande basse et dans la bande haute.
Un dispositif d'amplification selon l'invention 10 comporte au moins :
- un premier module d'amplification 1 (module A) adapté pour la bande haute, fonctionnant par exemple en classe AB, son amplification étant modulée selon un suivi d'enveloppe du signal d'entrée (« envelop tracking ») ;
- un deuxième module d'amplification 2 (module B) adapté pour fonctionner dans la bande basse, fonctionnant par exemple en classe D et réalisant la fonction de suivi d'enveloppe (« envelop tracking »). La fonction de suivi d'enveloppe consiste notamment à réaliser une gestion dynamique de la polarisation d'un amplificateur radiofréquence, en fonction des variations de l'enveloppe du signal à amplifier. Un tel module d'émission est notamment décrit dans la demande de brevet FR 18 00778 ;
- un commutateur de puissance 3 permettant de commuter la sortie du deuxième module (module B) :
   o soit vers une antenne 24 dédiée à la bande basse ;
   ∘ soit vers le premier module (module A) pour commander sa polarisation selon le suivi d'enveloppe.

Selon l'invention, lorsque l'amplificateur fonctionne dans la bande haute, le module d'amplification 2 de la bande basse assure la fonction de suivi d'enveloppe pour le module d'amplification 1 de la bande haute. Lorsque l'amplificateur fonctionne dans la bande basse, la modulation du signal émis est la modulation propre au module d'amplification 2 de la bande basse.

Le signal d'entrée RFin de l'amplificateur 10, est fourni sous forme d'échantillons IQ décrivant ce signal. La fréquence d'échantillonnage est fonction du débit de la modulation et doit respecter le critère de Nyquist-Shannon. Le signal d'entrée est commun aux deux modules d'amplifications 1, 2.

On décrit maintenant plus en détail les deux modules d'amplification 1, 2.

Le premier module 1 (module A) est par exemple réalisé selon une architecture classique de module radiofréquence. Il comporte au moins :
- Un circuit 11 composé d'un convertisseur numérique-analogique CNA et d'une transposition de fréquence, par exemple un modulateur IQ, réalisant la conversion numérique-analogique d'un signal bande en bande de base puis sa transposition vers les bandes VHF-UHF ;
- Un étage amplification de puissance 12 permettant d'adapter la puissance du signal RF au niveau de l'antenne, cet étage de puissance étant principalement constitué d'un amplificateur de puissance fonctionnant en classe AB et ;
- un filtre 13, ayant notamment pour fonction de filtrer les harmoniques.

Ce premier module d'amplification 1 est connecté en sortie à une antenne 14 fonctionnant en bande haute.

Le deuxième module 2 (module B), dont un exemple de réalisation est décrit dans le document FR 18 00778 précité, est une architecture émettrice radiofréquence RF réalisant les fonctions classe D et « envelop tracking » :
- En mode classe D, ce module 2 sert d'émission pour la bande basse, cette classe de fonctionnement offrant des performances en terme de rendement largement meilleur que pour la classe AB ;
- En mode « envelop tracking », ce module sert à moduler la polarisation de l'amplificateur de puissance 12 du module (module A), plus particulièrement il sert à moduler la tension de drain du ou des transistors de l'amplificateur 12. Cela, pour améliorer le rendement global du premier module dans la bande haute. A la différence de la polarisation actuelle selon l'art antérieur, où la polarisation fixe donc la valeur de la tension de drain fixe, la technique d'Envelop Tracking permet de moduler la tension de drain en fonction de l'enveloppe du signal d'entrée RFin pour optimiser à chaque instant le rendement en puissance ;

Ce deuxième module d'amplification 2, comporte en entrée un circuit numérique générant un signal PWM. Ce circuit 21, par exemple sous forme de FPGA, a notamment pour fonction de générer deux signaux de commande d'une cellule de commutation 22. Les deux signaux générés sont complémentaires :
- un premier signal PWM et ;
- un deuxième signal PWM_N complémentaire au premier.

Les deux signaux complémentaires PWM et PWM_N commandent la cellule de commutation 22. Cette cellule de commutation 22 est alimentée par une source d'alimentation 4 (incluse ou non dans l'amplificateur 10) fournissant une tension haute V_{dd1} et une tension basse V_{dd2}. En fonction de la valeur choisie pour ces alimentations, le deuxième module d'amplification est utilisé en classe D ou en mode « Envelop Tracking ». Un exemple de cellule de commutation est notamment décrit dans la demande de brevet FR 3 020 222 A1.
En sortie de la cellule de commutation 22, les signaux RF ont une forme carrée. Afin de retrouver le signal d'entrée, un filtre passe-bas 23 est connecté en sortie de la cellule de commutation. Les répliques du signal autour de la fréquence PWM ainsi que ses multiples vont ainsi être filtrés et seul le signal à la fréquence RF désirée est conservé. Ce filtre réalise également l'adaptation d'entrée des transistors de la cellule de commutation.

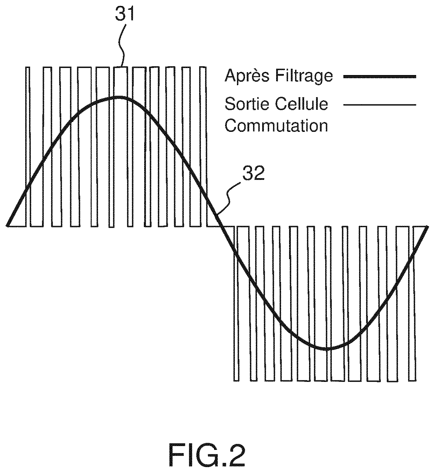

La figure 2 illustre par une courbe 31 le signal en sortie de la cellule de commutation 22 et par une courbe 32 le signal en sortie du filtre passe-bas juste avant le commutateur 3, le signal de la courbe 32 étant le signal de sortie du deuxième module d'amplification.

On revient à la figure 1. L'entrée du commutateur de puissance 3 est donc reliée à la sortie du deuxième modulateur. Le commutateur comporte deux sorties. Une première sortie est reliée à l'entrée de l'antenne 24 adaptée à la bande basse, et l'autre sortie commande la modulation du premier module 1 pour la bande haute. Plus précisément, la deuxième sortie du commutateur est reliée au drain du ou des transistors de l'amplificateur 12 du premier module d'amplification fonctionnant en bande haute.

Le fonctionnement du dispositif d'amplification 10 selon l'invention est donc le suivant :
- lorsqu'il fonctionne en bande basse, le commutateur 3 dirige la sortie du deuxième module d'amplification 2 (module B) vers l'antenne 24, adaptée à la bande basse, le signal émis étant à la fréquence RF désirée et modulée suivant l'enveloppe complexe IQ. ;
- lorsqu'il fonctionne en bande haute, le commutateur 3 dirige la sortie du deuxième module d'amplification (module B) vers le premier module d'amplification (module A), et plus particulièrement vers le drain de l'amplificateur 12 ; au niveau de l'antenne 14, adaptée à la bande haute, le signal émis est à la fréquence RF désirée et modulé suivant l'enveloppe complexe IQ, la tension de drain de l'amplificateur 12 suivant l'enveloppe de la modulation grâce à la technique de suivi d'enveloppe.

Le commutateur 3 est commandé par un circuit numérique, selon la commande appliquée le commutateur dirige la sortie du deuxième module d'amplification 2 vers l'une ou l'autre sortie. La commande peut être réalisée dans le circuit numérique 21 de ce deuxième module qui reçoit l'information de fréquence du signal d'entrée qui donne la fréquence de fonctionnement du dispositif d'amplification 10.

Par principe, la bande n'est pas limitée, l'invention est donc applicable à tous types d'amplificateurs fonctionnant dans des bandes de fréquence supérieures à 30 MHz.

Seule la largeur de bande instantanée maximum de l'émission en bande haute pourrait être limitée par les performances du deuxième modulateur (module B, en bande basse). En d'autres termes, les capacités classe D du deuxième module pourraient limiter les performances du suivi d'enveloppe (« Envelop traking ») en bande haute.

L'invention répond avantageusement aux besoins exprimés en introduction. On peut notamment citer les avantages suivants :
- amélioration drastique du rendement en bande basse ;
- grande simplification de la chaîne de puissance en bande basse ;
   ∘ par une réduction drastique du filtrage ;
   ∘ par une réduction du nombre d'étages d'amplification, un seul étage étant nécessaire au lieu d'une multitude dans les dispositifs de l'art antérieur ;
- l'architecture d'un dispositif selon l'invention est générique et compatible avec tous les designs d'architectures RF dans le domaine des communications, particulièrement adaptée aux radios numériques actuelles ;
- portée améliorée avec des modulations à enveloppes non-constantes, en particulier pour la bande haute l'invention permet d'utiliser un amplificateur plus puissant afin d'émettre plus de puissance en modulation d'amplitude et en modulation numérique.

## Revendications

1. Dispositif d'amplification radiofréquence (10) d'un signal d'entrée, le dispositif fonctionnant dans une bande de fréquence basse, correspondant aux fréquences inférieures à une fréquence donnée, et une bande de fréquence haute, correspondant aux fréquences supérieures à ladite fréquence donnée, il comporte au moins :
- un premier module d'amplification (1) recevant en entrée ledit signal d'entrée dudit dispositif, apte à fonctionner dans ladite bande haute, dont l'amplification est modulée selon un suivi d'enveloppe dudit signal d'entrée dudit dispositif, apte à être relié en sortie à une première antenne (14) adaptée à ladite bande haute ;
- un deuxième module d'amplification (2), recevant en entrée ledit signal d'entrée dudit dispositif, apte à fonctionner dans ladite bande basse et à réaliser ledit suivi d'enveloppe ;
- un commutateur (3) adapté à commuter a sortie dudit deuxième module d'amplification (2) :
∘ vers une deuxième antenne (24) adaptée à ladite bande basse, lorsque ledit dispositif d'amplification (10) fonctionne dans ladite bande basse ;
∘ vers ledit premier module d'amplification (1) pour commander l'amplification effectuée par ledit premier module selon ledit suivi d'enveloppe, lorsque ledit dispositif d'amplification (10) fonctionne dans ladite bande haute.

2. Dispositif d'amplification selon la revendication 1, **caractérisé en ce que** ledit deuxième module d'amplification (2) fonctionne en classe D.

3. Dispositif d'amplification selon l'une quelconque des revendications précédentes, **caractérisé en ce que** ledit premier module d'amplification fonctionne en classe AB.

4. Dispositif d'amplification selon l'une quelconque des revendications précédentes, **caractérisé en ce que** ledit premier module d'amplification comporte au moins :
- un circuit (11) composé d'un convertisseur numérique-analogique, CNA, et d'une transposition de fréquence réalisant la conversion numérique-analogique d'un signal en bande de base puis sa transposition vers les bandes VHF-UHF ;
- un étage amplification de puissance (12) permettant d'adapter la puissance du signal RF au niveau de ladite première antenne (14) et ;
- un filtre (13).

5. Dispositif d'amplification selon la revendication 4, **caractérisé en ce que** ledit étage d'amplification (12) étant composé d'un transistor à effet de champs, la tension de drain dudit transistor est modulée par le signal de sortie dudit deuxième module d'amplification (2) lorsque ledit commutateur (3) dirige la sortie de ce dernier vers ledit premier module d'amplification (1).

6. Emetteur radiofréquence, **caractérisé en ce qu'**il comporte un dispositif d'amplification selon l'une quelconque des revendications précédentes.

## Patentansprüche

1. Funkfrequenzverstärkungsvorrichtung (10) eines Eingangssignals, wobei die Vorrichtung in einem Tieffrequenzband arbeitet, welches den Frequenzen unterhalb einer gegebenen Frequenz entspricht, und einem Hochfrequenzband, welches den Frequenzen oberhalb der gegebenen Frequenz entspricht, mindestens Folgendes umfassend:
- ein erstes Verstärkungsmodul (1), welches am Eingang das Eingangssignal der Vorrichtung empfängt, welches in der Lage ist, in dem Hochband zu arbeiten, dessen Verstärkung gemäß einem Tracking einer Hülle des Eingangssignals der Vorrichtung moduliert wird, welches geeignet ist, am Ausgang mit einer ersten Antenne (14), welche für das Hochband geeignet ist, verbunden zu werden;
- ein zweites Verstärkungsmodul (2), welches am Eingang das Eingangssignal der Vorrichtung empfängt, welches dazu geeignet ist, in dem Tiefband zu arbeiten und das Tracking der Hülle zu bewerkstelligen;
- einen Umschalter (3), welcher geeignet ist, den Ausgang des zweiten Verstärkungsmoduls (2) umzuschalten:
∘ auf eine zweite Antenne (24), welche für das Tiefband geeignet ist, wenn die Verstärkungsvorrichtung (10) in dem Tiefband arbeitet;
∘ auf das erste Verstärkungsmodul (1) zum Steuern der durch das erste Modul bewerkstelligten Verstärkung gemäß dem Tracking der Hülle, wenn die Verstärkungsvorrichtung (10) in dem Hochband arbeitet.

2. Verstärkungsvorrichtung nach Anspruch 1, **dadurch gekennzeichnet, dass** das zweite Verstärkungsmodul (2) in der Klasse D arbeitet.

3. Verstärkungsvorrichtung nach einem der vorhergehenden Ansprüche, **dadurch gekennzeichnet, dass** das erste Verstärkungsmodul in der Klasse AB arbeitet.

4. Verstärkungsvorrichtung nach einem der vorhergehenden Ansprüche, **dadurch gekennzeichnet, dass** das erste Verstärkungsmodul mindestens Folgendes umfasst:
- einen Schaltkreis (11), bestehend aus einem Digital-Analog-Umsetzer DAU und einer Frequenztransposition, welche die Digital-Analog-Umsetzung eines Signals im Basisband und anschließend seine Transposition in die VHF-UHF- Bänder bewerkstelligt;
- eine Leistungsverstärkungsstufe (12), welche es ermöglicht, die Leistung des RF-Signals auf Höhe der ersten Antenne (14) anzupassen und;
- einen Filter (13).

5. Verstärkungsvorrichtung nach Anspruch 4, **dadurch gekennzeichnet, dass** die Verstärkungsstufe (12) aus einem Feldeffekt-Transistor besteht, wobei die Drainspannung des Transistors durch das Ausgangssignal des zweiten Verstärkungsmoduls (2) moduliert wird, wenn der Umschalter (3) den Ausgang dieses Moduls auf das erste Verstärkungsmodul (1) richtet.

6. Funkfrequenzsender, **dadurch gekennzeichnet, dass** er eine Verstärkungsvorrichtung nach einem der vorhergehenden Ansprüche umfasst.

## Claims

1. Radiofrequency amplification device (10) for an input signal, the device operating in a low-frequency band, corresponding to the frequencies lower than a given frequency, and a high-frequency band, corresponding to the frequencies higher than the given frequency, comprising at least:
- a first amplification module (1) which receives at the input the input signal from the device which is capable of operating in the high band, the amplification of which is modulated in accordance with an envelope tracking of the input signal of the device, which is capable of being connected at the output to a first antenna (14) which is adapted to the high band;
- a second amplification module (2) which receives at the input the input signal from the device which is capable of operating in the low band and of carrying out the envelope tracking;
- a commutator (3) which is suitable for commutating the output of the second amplification module (2):
∘ towards a second antenna (24) which is adapted to the low band when the amplification device (10) operates in the low band;
∘ towards the first amplification module (1) in order to control the amplification carried out by the first module in accordance with the envelope tracking when the amplification device (10) operates in the high band.

2. Amplification device according to claim 1, **characterised in that** the second amplification module (2) operates in class D.

3. Amplification device according to any one of the preceding claims, **characterised in that** the first amplification module operates in class AB.

4. Amplification device according to any one of the preceding claims, **characterised in that** the first amplification module comprises at least:
- a circuit (11) which is composed of a digital-to-analog converter DAC and a frequency transposition, which carries out the digital/analog conversion of a signal to the low band then the transposition thereof to the VHF/UHF bands;
- a power amplification stage (12) which allows adaptation of the power of the RF signal at the level of the first antenna (14) and;
- a filter (13).

5. Amplification device according to claim 4, **characterised in that**, the amplification stage (12) being composed of a field effect transistor, the drain voltage of the transistor is modulated by the output signal of the second amplification module (2) when the commutator (3) directs the output thereof to the first amplification module (1).

6. Radiofrequency transmitter, **characterised in that** it comprises an amplification device according to any one of the preceding claims.
